# EUROPEAN PATENT APPLICATION

(11) **EP 4 525 062 A1**
(43) Date of publication of application: **19.03.2025**
(21) Application number: 22951489.8
(22) Date of filing: 20.07.2022
(51) Int. Cl.: H01M 4/04, B30B 3/00

(54) **ELECTRODE SHEET MANUFACTURING DEVICE**

(71) Applicant: Contemporary Amperex Technology Co., Limited, Ningde, Fujian 352100 (CN)
(72) Inventor: YU, Linzhen, Ningde, Fujian 352100 (CN); LU, Lei, Ningde, Fujian 352100 (CN); WANG, Zheng, Ningde, Fujian 352100 (CN); LI, Shisong, Ningde, Fujian 352100 (CN); ZHANG, Shengwu, Ningde, Fujian 352100 (CN); QING, Yalong, Ningde, Fujian 352100 (CN)
(74) Representative: Gong, Jinping
(86) International application number: PCT/CN2022/106726
(87) International publication number: WO 2024/016211

(57) **Abstract**

The present application provides a pole piece manufacturing device, which relates to the battery field. The pole piece manufacturing device includes a membrane forming mechanism, a composite mechanism, a detection mechanism and an adjustment mechanism. The membrane forming mechanism is configured to form an active substance into a membrane. The composite mechanism is arranged downstream of the membrane forming mechanism, and the composite mechanism is configured to composite the membrane and a substrate into a pole piece. The detection mechanism is arranged upstream of the composite mechanism, and the detection mechanism is configured to detect a thickness or a weight per unit area of the membrane. The adjustment mechanism is connected to the membrane forming mechanism, and the adjustment mechanism is connected in communication with the detection mechanism. The adjustment mechanism is configured to adjust the membrane forming mechanism according to detection results of the detection mechanism, so as to control the thickness or the weight per unit area of the membrane within a preset range. The membrane formed by the membrane forming mechanism is detected by providing the detection mechanism, wherein when the membrane does not meet the design requirements, the membrane forming mechanism is adjusted timely through the adjustment mechanism to make it meet the design requirements, improving the yield rate of the membrane, so that the yield rate of the pole piece produced by this membrane is high.

## Description

### Technical Field

The application relates to the field of battery, in particular, to a pole piece manufacturing device.

### Background Art

Battery is widely used in new energy field, such as electric vehicle, new energy vehicle etc., which have become a new development trend of automobile industry. A battery includes an electrode assembly, which is a component of the battery where the electrochemical reaction takes place. The electrode assembly is mainly formed by winding or stacking positive pole pieces and negative pole pieces.

At present, the manufacture of pole pieces is mainly divided into wet technology and dry technology. However, the yield rate of the pole pieces manufactured by the dry technology is low.

### Summary

The objective of embodiments of the present application is to provide a pole piece manufacturing device, which aims to improve the low yield of pole pieces produced by the dry technology in the related art.

In a first aspect, the embodiments of the present application provide a pole piece manufacturing device, including: a membrane forming mechanism, a composite mechanism, and a detection mechanism, where the membrane forming mechanism is configured to form an active substance into a membrane; the composite mechanism is arranged downstream of the membrane forming mechanism, and the composite mechanism is configured to composite the membrane and a substrate into a pole piece; the detection mechanism is arranged upstream of the composite mechanism, and the detection mechanism is configured to detect a thickness or a weight per unit area of the membrane; the adjustment mechanism is connected to the membrane forming mechanism, the adjustment mechanism is connected in communication with the detection mechanism, and the adjustment mechanism is configured to adjust the membrane forming mechanism according to detection results of the detection mechanism, so as to control the thickness or the weight per unit area of the membrane within a preset range.

In the above technical solution, the membrane forming mechanism can form the active substance into the membrane, and then the substrate and the membrane are composited by the composite mechanism to obtain the pole piece. The pole piece manufacturing device detects the membrane formed by the membrane forming mechanism through providing the detection mechanism upstream of the composite mechanism, so as to determine whether the membrane formed by the membrane forming mechanism meets the design requirements. If the design requirements are not met, the membrane forming mechanism can be adjusted timely by adjusting the membrane forming mechanism, so as to make the membrane formed by the membrane forming mechanism meet the design requirements. In this way, the yield rate of the membrane is increased, resulting in a higher yield rate of the pole piece produced using this membrane.

As an optional technical solution of the embodiments of the present application, the first pressure roller and the second pressure roller cooperate with each other to make the active substance formed into the membrane by rolling; and the adjustment mechanism is connected to the first pressure roller and/or the second pressure roller, and the adjustment mechanism is configured to adjust a gap between the first pressure roller and the second pressure roller according to the detection results of the detection mechanism.

**In** the above technical solution, the first pressure roller and the second pressure roller can cooperate with each other to roll the active substance to form a membrane. The gap between the first pressure roller and the second pressure roller can affect the thickness or the weight per unit area of the membrane. For example, when the gap between the first pressure roller and the second pressure roller is large, the thickness or the weight per unit area of the membrane is also large; and when the gap between the first pressure roller and the second pressure roller is small, the thickness or the weight per unit area of the membrane is also small. The adjustment mechanism can be connected to at least one of the first pressure roller and the second pressure roller, so as to drive at least one of the first pressure roller and the second pressure roller close to or away from the other, reducing or increasing the gap between the first pressure roller and the second pressure roller. When the detection mechanism detects a large thickness or a weight per unit area of the membrane, the adjustment mechanism can reduce the gap between the first pressure roller and the second pressure roller; and when the detection mechanism detects a small thickness or weight per unit area of the membrane is small, the adjustment mechanism can increase the gap between the first pressure roller and the second pressure roller to control the thickness or the weight per unit area of the membrane within the preset range, so that the thickness or the weight per unit area of the membrane meets the design requirements.

As an optional technical solution of the embodiments of the present application, the composite mechanism includes a composite roller, and the composite roller and the second pressure roller cooperate with each other to roll the membrane and the substrate, so as to composite the membrane and the substrate into the pole piece.

In the above technical solution, the composite roller and the second pressure roller cooperate with each other to roll the membrane and the substrate, so as to composite the membrane and the substrate into the pole piece. The second pressure roller serves as both a component for rolling the active substance and a component for compositing the membrane and substrate, with one component achieving two effects, the structure of the pole piece manufacturing device is simplified and the cost of the pole piece manufacturing device is reduced.

As an optional technical solution of the embodiments of the present application, the adjustment mechanism is connected to the first pressure roller, and the adjustment mechanism is configured to adjust a position at which the first pressure roller is located, so as to adjust the gap between the first pressure roller and the second pressure roller.

**In** the above technical solution, due to the second pressure roller needs to cooperate with the composite roller to roll the membrane and the substrate, if the adjustment mechanism adjusts the position at which the second pressure roller is located, it may change the gap between the composite roller and the second pressure roller, resulting in a worse composite effect. Therefore, by adjusting the position at which the first pressure roller is located through the adjustment mechanism, the gap between the first pressure roller and the second pressure roller can also be adjusted while the composite gap between the second pressure roller and the composite roller is not changed, so that the membrane formed by the membrane forming mechanism meets the design requirements.

As an optional technical solution of the embodiments of the present application, the membrane is provided with a winding area wound on the second pressure roller, and the detection mechanism is provided with a detection end, wherein the detection end faces the winding area.

**In** the above technical solution, the detection end faces the winding area to achieve the detection of the thickness or the weight per unit area of the membrane. The winding area of the membrane is attached to the second pressure roller, and there will be no swaying, offset, or other interference with the measurement, making the detection mechanism more accurate in detecting the thickness or the weight per unit area of the membrane.

As an optional technical solution of the embodiments of the present application, along a circumferential direction of the second pressure roller, the first pressure roller is closer to the detection mechanism than the composite roller.

In the above technical solution, the active substance is formed into the membrane after being rolled by the first pressure roller and the second pressure roller, and the membrane is transported between the second pressure roller and the composite roller to be composited with the substrate. If the detection mechanism detects that the membrane does not meet the design requirements, then along the circumference direction of the second pressure roller, a section of membrane between the first pressure roller and the detection mechanism does not meet the design requirements. The position at which the detection mechanism is located is arranged closer to the first pressure roller, and when the detection mechanism detects that the membrane does not meet the design requirements, the adjustment mechanism can adjust the membrane forming mechanism timely, making a length of the membrane that does not meet the design requirements shorter.

As an optional technical solution of the embodiments of the present application, the first pressure roller, the second pressure roller, and the composite roller are arranged along a first direction; and along the first direction, the second pressure roller is located between the first pressure roller and the composite roller, wherein the first direction is perpendicular to an axial direction of the second pressure roller.

In the above technical solution, with the first pressure roller, the second pressure roller, and the composite roller being arranged in the first direction, the second pressure roller not only can cooperate with the first pressure roller to roll the active substance to form the membrane, but also can cooperate with the composite roller to roll the membrane and the substrate, so as to composite the membrane and the substrate into the pole piece. The second pressure roller can also transport the formed membrane between the second pressure roller and the composite roller. With one component achieving multiple functions, the pole piece manufacturing device has a simple structure and a low cost. **In** addition, by arranging the first pressure roller, second pressure roller, and composite roller in the first direction, the space occupation of the membrane forming mechanism can be reduced, improving the space utilization rate of the membrane forming mechanism.

As an optional technical solution of the embodiments of the present application, the first pressure roller, the detection mechanism is a laser thickness gauge, a β-ray weight gauge, or an X-ray weight gauge.

In the above technical solution, the thickness of the membrane can be conveniently measured using the laser thickness gauge. The use of the β-ray weight gauge is suitable for measuring the weight per unit area of the membrane of the positive pole piece. The use of the X-ray weight gauge is suitable for measuring the weight per unit area of the membrane of the negative pole piece.

As an optional technical solution of the embodiments of the present application, the membrane forming mechanism includes a third pressure roller, and the first pressure roller and the third pressure roller cooperate with each other to roll the active substance.

In the above technical solution, the third pressure roller and the first pressure roller can achieve a primary rolling on the active substance, and the first pressure roller and the second pressure roller can achieve a secondary rolling on the active substance. Through multi-stage rolling, the active substance can gradually form into the membrane, and a degree of each rolling is not too large, which is conducive to improving the uniformity and thickness consistency of the membrane, and improving the performance of the membrane. This results in a higher yield rate of the pole piece made using this membrane.

As an optional technical solution of the embodiments of the present application, a first rolling gap is formed between the first pressure roller and the seconding press roller, and a second rolling gap is formd between the first pressure roller and the third pressure roller, wherein the active substance passes through the second rolling gap and the first rolling gap in sequence, and a width of the first rolling gap is smaller than that of the second rolling gap.

In the above technical solution, by making the width of the first rolling gap smaller than the width of the second rolling gap, it is beneficial to gradually thinning the active substance by rolling, so that the degree of each thinning by rolling is not too large, which is conducive to improving the uniformity and thickness consistency of the membrane.

As an optional technical solution of the embodiments of the present application, the adjustment mechanism is connected to the first pressure roller and the third pressure roller, and the adjustment mechanism is configured to adjust positions at which the first pressure roller and the third pressure roller are located according to the detection results of the detection mechanism, so as to adjust the width of the first rolling gap while the second rolling gap remains unchanged.

In the above technical solution, the first rolling gap is the gap of the final formed membrane, while the second rolling gap is the gap of the semi-finished product of the formed membrane. If the detection mechanism detects that the membrane does not meet the design requirements, only the first rolling gap needs to be adjusted. In order to adjust the first rolling gap while not affect the second rolling gap, both the first pressure roller and the third pressure roller are connected to the adjustment mechanism. The adjustment mechanism simultaneously drives the first pressure roller and the third pressure roller to move, causing the first pressure roller and the third pressure roller to be relatively stationary, and the first pressure roller and the second pressure roller to move relatively.

As an optional technical solution of the embodiments of the present application, the membrane forming mechanism includes a first pressure roller and a second pressure roller, and the first pressure roller and the second pressure roller cooperate with each other to make the active substance formed into the membrane by rolling; and the adjustment mechanism is connected to the first pressure roller and/or the second pressure roller, and the adjustment mechanism is configured to increase or decrease a pressure applied to the first pressure roller and/or the second pressure roller according to the detection results of the detection mechanism.

In the above technical solution, if the detection mechanism detects that the thickness or the the weight per unit area of the membrane is small, the adjustment mechanism reduces the pressure applied to the first pressure roller and/or the second pressure roller, causing a decrease in the roller pressure of the first pressure roller and/or the second pressure roller in contact with the active substance, thereby increasing the thickness or the weight per unit area of the membrane. If the detection mechanism detects that the thickness or the weight per unit area of the membrane is large, the adjustment mechanism increases the pressure applied to the first and/or second pressure rollers, causing an increase in the roller pressure of the first pressure roller and/or the second pressure roller contact with the active substance, thereby reducing the thickness or the weight per unit area of the membrane.

### Brief Description of Drawings

In order to illustrate the technical solutions in the embodiments of the present application more clearly, brief description will be made below to the drawings required in the embodiments. It should be understood that the following drawings show only some embodiments of the present application and should not be regarded as limiting the scope, and other relevant drawings may be obtained based on these drawings by those of ordinary skill in the art without any creative efforts.
Fig. 1 is a schematic block diagram of the pole piece manufacturing device provided by some embodiments of the present application;
Fig. 2 is a structural schematic diagram of the pole piece manufacturing device provided by some embodiments of the present application;
Fig. 3 is a structural schematic diagram of the pole piece manufacturing device (adjustment mechanism is connected to the second pressure roller and the composite roller) provided by some embodiments of the present application;
Fig. 4 is a structural schematic diagram of the pole piece manufacturing device (the adjustment mechanism is connected to the second pressure roller) provided by some embodiments of the present application;
Fig. 5 is a structural schematic diagram of pole piece manufacturing device (the detection end is not opposite to the winding area) provided by some embodiments of the present application;
Fig. 6 is a structural schematic diagram of the pole piece manufacturing device (the detection mechanism is close to the composite roll) provided by some embodiments of the present application; and
FIG. 7 is a structural schematic diagram of the pole piece manufacturing device (including a third pressure roller) provided by some embodiments of the present application.

Reference signs: 10-pole piece manufacturing device; 100-membrane forming mechanism; 110-first pressure roller; 120-second pressure roller; 130-third pressure roller; 200-detection mechanism; 300-adjustment mechanism; 310-driving member; 320-connecting member; 321-first connecting part; 322-second connecting part; 323-third connecting part; 400-composite mechanism; 410-composite roller; 500-active substance; 700-membrane; 800-pole piece.

### Detailed Description of Embodiments

Below in conjunction with the accompanying drawings, the embodiments of the technical solutions of the present application will be described in detail. The following examples are only used to illustrate the technical solutions of the present application more clearly, and therefore are only examples, rather than limiting the protection scope of the present application.

Unless otherwise defined, all technological and scientific terms used herein have the same meanings as those commonly understood by those skilled in the art to which the present application belongs. The terms used herein are merely for the purpose of describing specific embodiments, but are not intended to limit the present application. The terms "include" and "have" and any variations thereof in the specification and claims of the present application as well as the brief description of the drawings described above are intended to cover non-exclusive inclusion.

In the description of the embodiments of the present application, the terms "first", "second", and the like are only used to distinguish different objects and cannot be understood as indicating or implying relative importance or implying the quantity, specific order, or primary and secondary relation of the indicated technical features. In the description of the embodiments of the present application, "a plurality of" means two or more, unless otherwise specified.

The phrase "embodiment" referred to herein means that specific features, structures, or characteristics described in conjunction with the embodiment may be included in at least one embodiment of the present application. The phrase at various locations in the specification does not necessarily refer to the same embodiment, or an independent or alternative embodiment exclusive of another embodiment. Those skilled in the art understand, in explicit and implicit manners, that an embodiment described herein may be combined with another embodiment.

In the description of the embodiments of the present application, term "and/or" is only a kind of associative relationship describing associated objects, which means that there can be three kinds of relationships, for example, A and/or B can represent three following situation: A exists alone, both A and B exist, and B exists alone. In addition, the character "/" herein generally indicates that the contextual objects thereof are in an "or" relationship.

In the description of the embodiments of the present application, the term "multiple" means more than two (including two). Similarly, "multiple groups" refers to more than two groups (including two groups), and "multiple pieces" refers to more than two pieces (including two pieces).

In the description of the embodiments of the present application, an orientation or positional relationship indicated by the technical term "center", "longitudinal", "transverse", "length", "width", "thickness", "upper", "lower", "front", " back", "left", "right", "vertical", "horizontal", "top", "bottom", "internal", "external", "clockwise", "counterclockwise", "axial direction", "radial direction", "circumferential direction", or the like is based on an orientation or positional relationship shown in the drawings, and is merely for ease of describing the present application and simplifying the description, but does not indicate or imply that an apparatus or an element referred to must have a specific orientation or be constructed and operated in a specific orientation, and therefore cannot be understood as a limitation on the embodiments of the present application.

In the description of the embodiments of the present application, unless otherwise explicitly specified and defined, the technical terms such as "installation", "linkage", "connection" and "fixation" should be understood in a broad sense, for example, it can be a fixed connection, a detachable connection, or integrated; it can also be a mechanical connection, or an electrical connection; it can be a direct connection or an indirect connection through an intermediary, and it can be an internal communication of two components or an interaction relation of two components. Those of ordinary skill in the art can understand the specific meanings of the above terms in the embodiments of the present application according to specific situations.

At present, from the perspective of the development of the market situation, the application of batteries is becoming more and more extensive. Batteries are not only used in energy storage power systems such as hydropower, firepower, windpower and solar power plants, but also widely used in electric vehicles such as electric bicycles, electric motorcycles, electric cars, as well as military equipment and aerospace and other fields. With the continuous expansion of battery application fields, the market demand thereof is also constantly expanding.

The battery includes an electrode assembly, which is a part in which an electrochemical reaction occurs in the battery. The electrode assembly is mainly formed by winding or stacking positive pole pieces and negative pole pieces. The inventor noticed that the manufacture of pole pieces is mainly divided into wet technology and dry technology. However, the yield rate of the pole pieces manufactured by dry technology is low.

The inventor further studies and finds, when using dry technology to manufacture a pole piece, powder material and granule of active substance is supplied to a surface of a roller, and the powder material and the granule of the active substance are directly rolled into a membrane, after that, the membrane and a substrate are composited to form the pole piece. In this process, the quality of the membrane was not detected, and rolling mechanism was not adjusted according to the production situation, resulting in many of the produced membranes not meeting the design requirements, so that the yield rate of the pole piece produced by adopting such membranes is low.

In view of this, the embodiments of the present application provide a pole piece manufacturing device, where by providing a detection mechanism upstream of a composite mechanism, whether the membrane formed by a membrane forming mechanism meets the design requirements is determined. If the design requirements are not met, the membrane forming mechanism can be adjusted timely by adjusting the membrane forming mechanism, so as to make the membrane formed by the membrane forming mechanism meet the design requirements. **In** this way, the yield rate of the membrane is increased, resulting in a higher yield rate of the pole piece produced using this membrane

The technical solution described in the embodiments of the present application is applicable to the manufacture of the pole piece.

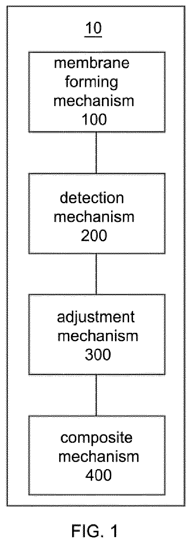

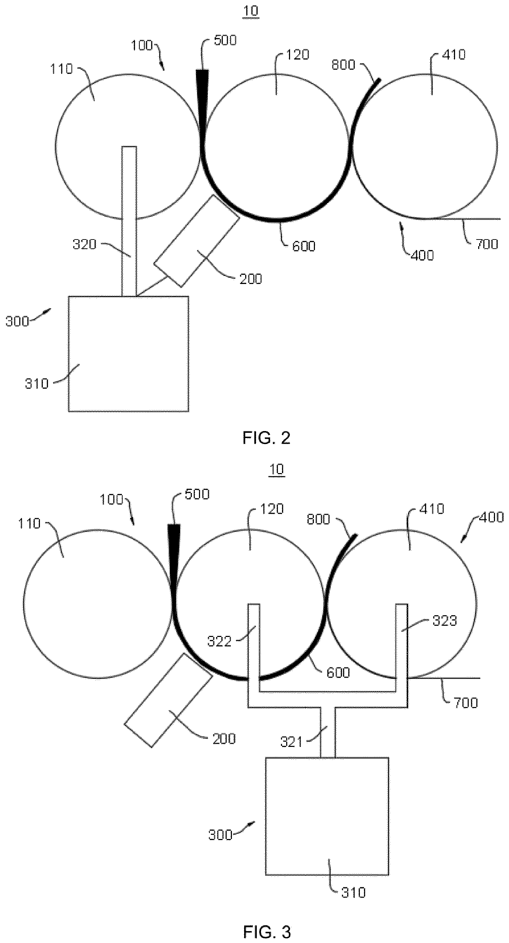

Please refer to Figure 1 and Figure 2. Figure 1 is a schematic block diagram of the pole piece manufacturing device 10 provided in some embodiments of the present application. Figure 2 is a structural schematic diagram of the pole piece manufacturing device 10 provided in some embodiments of the present application. The embodiments of the present application provide a pole piece manufacturing device 10, which includes a membrane forming mechanism 100, a composite mechanism 400, a detection mechanism 200, and an adjustment mechanism 300. The membrane forming mechanism 100 is configured to form the active substance 500 into a membrane 600. The composite mechanism 400 is arranged downstream of the membrane forming mechanism 100, and is configured to composite the membrane 600 and the substrate 700 into a pole piece 800. The detection mechanism 200 is arranged upstream of the composite mechanism 400, and is configured to detect a thickness or a weight per unit area of the membrane 600. The adjustment mechanism 300 is connected to the membrane forming mechanism 100, and the adjustment mechanism 300 is connected in communication with the detection mechanism 200. The adjustment mechanism 300 is configured to adjust the membrane forming mechanism 100 according to detection results of the detection mechanism 200, so as to control the thickness or the weight per unit area of the membrane 600 within the preset range.

The membrane forming mechanism 100 is a mechanism for forming an active substance 500 into the membrane 600. The membrane forming mechanism 100 includes but is not limited to a roll-forming mechanism, and an extrusion-forming mechanism, etc. The active substance 500 of the positive pole piece is different from that of the negative pole piece. For example, the active substance 500 of the positive pole piece can be lithium cobalate, lithium iron phosphate, ternary lithium or lithium manganate. The active substance 500 of the negative pole piece can be carbon or silicon, etc.

Composite mechanism 400 is a mechanism that composites the membrane 600 and the substrate 700 into the pole piece 800. From the perspective of the pole piece 800, the membrane 600 is the active substance layer of the pole piece 800, and the substrate 700 is a current collector of the pole piece 800. The substrate 700 of the positive pole piece can be aluminum. The substrate 700 of the negative pole piece can be copper.

The detection mechanism 200 is a mechanism that can detect the membrane 600 formed by the membrane forming mechanism 100, so as to determine whether the thickness or the weight per unit area of the membrane 600 meets the design requirements. It should be noted that the detection mechanism 200 is located upstream of the composite mechanism 400, which means that the detection mechanism 200 detects the membrane 600 before composited by the composite mechanism 400, rather than the membrane 600 after composited by the composite mechanism 400.

The adjustment mechanism 300 is a mechanism that can adjust forming condition of the membrane forming mechanism 100 according to the detection results of the detection mechanism 200. "The adjustment mechanism 300 being connected in communication with the detection mechanism 200" includes the connection between the adjustment mechanism 300 and the detection mechanism 200 through a wired connection such as a wire and a network cable, as well as the connection between the adjustment mechanism 300 and the detection mechanism 200 through a wireless connection such as Bluetooth and wireless network. It can be a direct connection between the adjustment mechanism 300 and the detection mechanism 200, or an indirect connection between the adjustment mechanism 300 and the detection mechanism 200 through an intermediate component. For example, the intermediate component can be a controller, with the detection mechanism 200 electrically connected to the controller and the controller electrically connected to the adjustment mechanism 300. The controller receives the detection results of the detection mechanism 200, and controls the adjustment mechanism 300 to adjust the membrane forming mechanism 100 according to the detection results, so as to control the thickness or the weight unit area of the membrane 600 formed by the membrane forming mechanism 100 within a preset range.

The weight per unit area refers to the weight in a unit area on the membrane 600. For example, the weight in 100 mm² on the membrane 600.

The membrane forming mechanism 100 can form the active substance 500 into the membrane 600, and then the substrate 700 and the membrane 600 are composited by the composite mechanism 400 to obtain the pole piece 800. The pole piece manufacturing device 10 detects the membrane 600 formed by the membrane forming mechanism 100 by meas of providing the detection mechanism 200 upstream of the composite mechanism 400, so as to determine whether the membrane 600 formed by the membrane forming mechanism 100 meets the design requirements. If the design requirements are not met, the membrane forming mechanism 100 is adjusted timely by the adjustment mechanism 300, so as to make the membrane 600 formed by the membrane forming mechanism 100 meet the design requirements. **In** this way, the yield rate of membrane 600 is increased, resulting in a higher yield rate of the pole piece 800 produced using this membrane 600.

In some embodiments, the membrane forming mechanism 100 includes a first pressure roller 110 and a second pressure roller 120, which cooperate with each other to make the active substance 500 formed into the membrane 600 by rolling. The adjustment mechanism 300 is connected to the first pressure roller 110 and/or the second pressure roller 120, and is configured to adjust a gap between the first pressure roller 110 and the second pressure roller 120 according to the detection results of the detection mechanism 200.

The first pressure roller 110 and the second pressure roller 120 are both roller structures. There is a gap between the first pressure roller 110 and the second pressure roller 120 for the active substance 500 to pass through. When the active substance 500 passes through this gap, it is extrued by the first pressure roller 110 and the second pressure roller 120 to form the membrane 600.

"The adjustment mechanism 300 being connected to the first pressure roller 110 and/or the second pressure roller 120" includes three situations: the adjustment mechanism 300 is connected to the first pressure roller 110, the adjustment mechanism 300 is connected to the second pressure roller 120, and the adjustment mechanism 300 is connected to both the first pressure roller 110 and the second pressure roller 120. The adjustment mechanism 300 can adjust the position at which at least one of the first pressure roller 110 and the second pressure roller 120 is located, so as to adjust the gap between the first pressure roller 110 and the second pressure roller 120, achieving control of the thickness or the weight per unit area of the membrane 600 formed by the membrane forming mechanism 100.

The first pressure roller 110 and the second pressure roller 120 can cooperate with each other to roll the active substance 500 to form the membrane 600. The gap between the first pressure roller 110 and the second pressure roller 120 can affect the thickness or the weight per unit area of the membrane 600. For example, when the gap between the first pressure roller 110 and the second pressure roller 120 is large, the thickness or the weight per unit area of the membrane 600 is also large; and when the gap between the first pressure roller 110 and the second pressure roller 120 is small, the thickness or the weight per unit area of the membrane 600 is also small. The adjustment mechanism 300 can be connected to at least one of the first pressure roller 110 and the second pressure roller 120, so as to drive at least one of the first pressure roller 110 and the second pressure roller 120 close to or away from the other, reducing or increasing the gap between the first pressure roller 110 and the second pressure roller 120. When the detection mechanism 200 detects a large thickness or weight per unit area of the membrane 600, the adjustment mechanism 300 can reduce the gap between the first pressure roller 110 and the second pressure roller 120; and when the detection mechanism 200 detects a small thickness or weight per unit area of the membrane 600 is small, the adjustment mechanism 300 can increase the gap between the first pressure roller 110 and the second pressure roller 120 to control the thickness or the weight per unit area of membrane 600 within the preset range, so that the thickness or the weight per unit area of the membrane 600 meets the design requirements.

Please refer to Figure 2. In some embodiments, the composite mechanism 400 includes a composite roller 410, which is cooperated to the second pressure roller 120 to roll the membrane 600 and the substrate 700, so as to composite the membrane 600 and the substrate 700 into the pole piece 800.

The composite roller 410 is a roller structure configured for compositing the membrane 600 and substrate 700. There is a gap between the composite roller 410 and the second pressure roller 120 for the membrane 600 and the substrate 700 to pass through. When passing through the gap between the composite roller 410 and the second pressure roller 120, the membrane 600 and the substrate 700 are compacted by an effect of the composite roller 410 and the second pressure roller 120. **In** other words, the composite roller 410 and the second pressure roller 120 can cooperate with each other to composite the membrane 600 and the substrate 700, which can reduce the number of the composite rollers 410. Certainly, in some embodiments, the composite mechanism 400 may include multiple composite rollers 410, which cooperate with each other to roll the membrane 600 and the substrate 700, so as to composite the membrane 600 and the substrate 700.

The composite roller 410 and the second pressure roller 120 cooperate with each other to roll the membrane 600 and the substrate 700, so as to composite the membrane 600 and the substrate 700 into the pole piece 800. The second pressure roller 120 serves as both a component for rolling the active substance 500 and a component for compositing the membrane 600 and substrate 700, with one component achieving two effects, the structure of the pole piece manufacturing device 10 is simplified and the cost of the pole piece manufacturing device 10 is reduced.

Please refer to Figure 2. In some embodiments, the adjustment mechanism 300 is connected to the first pressure roller 110, and is configured to adjust the position at which the first pressure roller 110 is located, so as to adjust the gap between the first pressure roller 110 and the second pressure roller 120.

The adjustment mechanism 300 may include a driving member 310 and a connecting member 320, where the connecting member 320 is connected to the driving member 310 and the first pressure roller 110. The driving member 310 drives the connecting member 320 to act, and the connecting member 320 transmits the power of the driving member 310 to drive the first pressure roller 110 close to or away from the second pressure roller 120, thereby adjusting the gap between the first pressure roller 110 and the second pressure roller 120.

Due to the the second pressure roller 120 needs to cooperate with the composite roller 410 to roll the membrane 600 and the substrate 700, if the adjustment mechanism 300 adjusts the position at which the second pressure roller 120 is located, it may change the gap between the composite roller 410 and the second pressure roller 120, resulting in a worse composite effect. Therefore, by adjusting the position at which the first pressure roller 110 is located through the adjustment mechanism 300, the gap between the first pressure roller 110 and the second pressure roller 120 can also be adjusted while the composite gap between the second pressure roller 120 and the composite roller 410 is not changed, so that the membrane 600 formed by the membrane forming mechanism 100 meets the design requirements.

Please refer to Figure 3, which is a structural schematic diagram of the pole piece manufacturing device 10 provided in some embodiments of the present application (the adjustment mechanism 300 is connected to the second pressure roller 120 and the composite roller 410). In some embodiments, the adjustment mechanism 300 is connected to the second pressure roller 120 and the composite roller 410. The adjustment mechanism 300 is configure to adjust the positions at which the second pressure roller 120 and the composite roller 410 are located, so as to adjust the gap between the first pressure roller 110 and the second pressure roller 120.

The adjustment mechanism 300 may include a driving member 310 and a connecting member 320, where the connecting member 320 is connected to the driving member 310, the first pressure roller 110, and the composite roller 410. For example, the connecting member 320 includes a first connecting part 321, a second connecting part 322, and a third connecting part 323, where the first connecting part 321 is connected to an output end of the driving member 310, and the second connecting part 322 and the third connecting part 323 are both connected to the first connecting part 321. The second connecting part 322 is connected to the second pressure roller 120, and the third connecting part 323 is connected to the composite roller 410. When the driving element 310 acts, the first connecting part 321 drives the second connecting part 322 and the third connecting part 323 to act, and by the transmission of the second connecting part 322 and the third connecting part 323, a simultaneous movement of the second pressure roller 120 and the composite roller 410 is achieved.

When the adjustment mechanism 300 adjusts the positions at which the second pressure roller 120 and the composite roller 410 are located, the second pressure roller 120 and the composite roller 410 are relatively stationary, and the second pressure roller 120 and the first pressure roller 110 are in relative motion. In short, when the adjustment mechanism 300 adjusts the positions at which the second pressure roller 120 and the composite roller 410 are located, the gap between the second pressure roller 120 and the composite roller 410 remains unchanged, and the gap between the second pressure roller 120 and the first pressure roller 110 changes, so as to achieve the adjustment of the thickness or the weight per unit area of the membrane 600 without affecting the composite of the membrane 600 and the substrate 700.

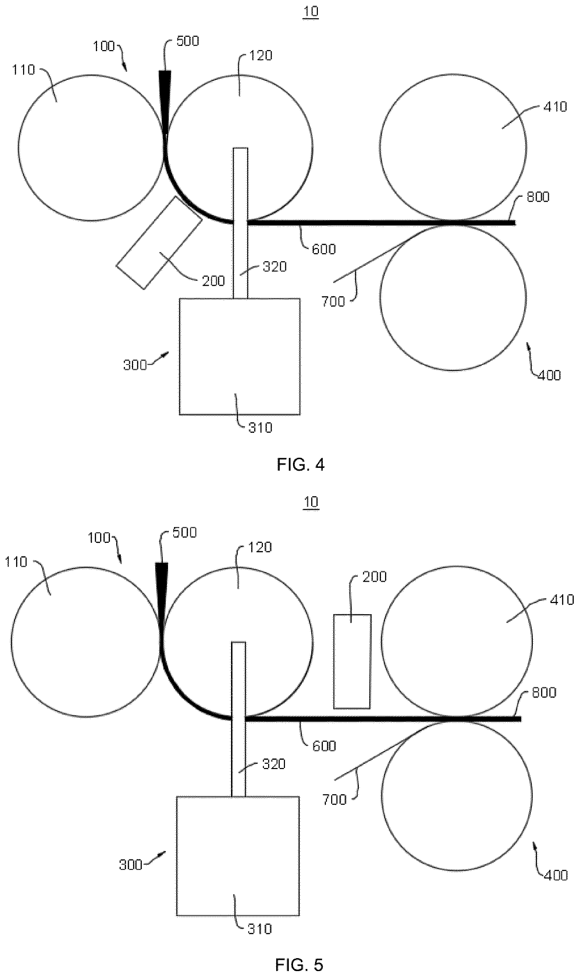

Please refer to Figure 4, which is a structural schematic diagram of the pole piece manufacturing device 10 provided in some embodiments of the present application (the adjustment mechanism 300 is connected to the second pressure roller 120). In some embodiments, the composite mechanism 400 includes two composite rollers 410, which cooperate with each other to roller the membrane 600 and the substrate 700, so as to composite the membrane 600 and the substrate 700 into the pole piece 800. At this point, as the composite roller 410 does not need to cooperate with the second pressure roller 120, changing in the position at which the second pressure roller 120 is located alone will not affect the composite of the substrate 700 and the membrane 600. Therefore, the adjustment mechanism 300 can only be connected to the second pressure roller 120, and by changing the position at which the second pressure roller 120 is located, thereby changing the gap between the second pressure roller 120 and the first pressure roller 110, the adjustment of the thickness or the weight per unit area of the membrane 600 is achieved.

Please refer to Figures 2 to 4. In some embodiments, the membrane 600 is provided with a winding area wound around the second pressure roller 120. The detection mechanism 200 is provided with a detection end, and the detection end faces the winding area.

When the first pressure roller 110 and the second pressure roller 120 cooperate with each other to roll the active substance 500, the first pressure roller 110 and the second pressure roller 120 can be arranged to rotate at a differential speed. For example, if the roller diameters of the first and second pressure rollers 110 are the same, the rotational speed of the second pressure roller 120 is set to be greater than that of the first pressure roller 110. In this way, the membrane 600 formed by rolling of the first pressure roller 110 and the second pressure roller and 120 is easily transferred and wound onto the second pressure roller 120, avoiding tearing or unevenness of the rolled membrane 600 caused by random transfer thereof.

The detection end faces the winding area to achieve the detection of the thickness or the weight per unit area of the membrane 600. The winding area of the membrane 600 is attached to the second pressure roller 120, and there will be no swaying, offset, or other interference with the measurement, making the detection mechanism 200 more accurate in detecting the thickness or the weight per unit area of the membrane 600.

Please refer to Figure 5, which is a structural schematic diagram of the pole piece manufacturing device 10 provided in some embodiments of the present application (the detection end is not opposite the winding area). As shown in Figure 5, the detection end of the detection mechanism 200 can also not face the winding area. In Figure 5, the detection end of the detection mechanism 200 is opposite the suspended part of the membrane 600, so as to detect the thickness or the weight per unit area of the membrane 600.

Please refer to Figures 2 to 4. In some embodiments, along the circumference direction of the second pressure roller 120, the first pressure roller 110 is closer to the detection mechanism 200 than the composite roller 410.

"Along the circumference direction of the second pressure roller 120, the first pressure roller 110 being closer to the detection mechanism 200 than the composite roller 410" can also be understood as that along the circumference direction of the second pressure roller 120, the distance between the detection mechanism 200 and the first pressure roller 110 is smaller than the distance between the detection mechanism 200 and the second pressure roller 120.

The active substance 500 is formed into the membrane 600 after being rolled by the first pressure roller 110 and the second pressure roller 120, and the membrane 600 is transported between the second pressure roller 120 and the composite roller 410 to be composited with the substrate 700. If the detection mechanism 200 detects that the membrane 600 does not meet the design requirements, then along the circumference direction of the second pressure roller 120, a section of the membrane 600 between the first pressure roller 110 and the detection mechanism 200 does not meet the design requirements. The position at which the detection mechanism 200 is located is arranged closer to the first pressure roller 110, and when the detection mechanism 200 detects that the membrane 600 does not meet the design requirements, the adjustment mechanism 300 can adjust the membrane forming mechanism 100 timely, making a length of the membrane 600 that does not meet the design requirements shorter.

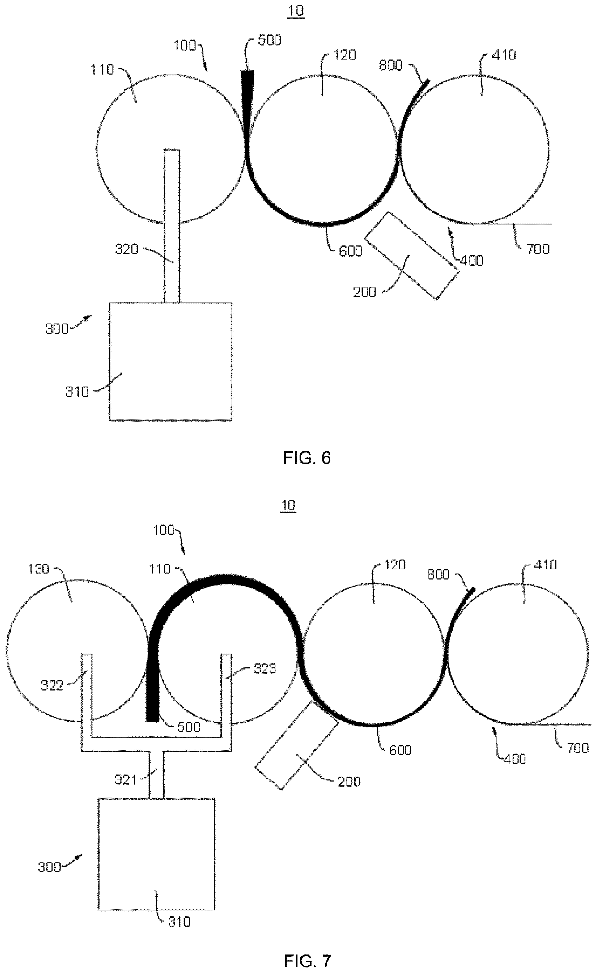

Please refer to Figure 6, which is a structural schematic diagram of the pole piece manufacturing device 10 (detection mechanism 200 is close to the composite roller 410) provided in some embodiments of the present application. In some embodiments, along the circumference direction of the second pressure roller 120, the composite roller 410 is closer to the detection mechanism 200 than the first pressure roller 110. In other words, along the circumference direction of the second pressure roller 120, the distance between the detection mechanism 200 and the first pressure roller 110 is greater than the distance between the detection mechanism 200 and the second pressure roller 120.

Please refer to Figures 2 to 6. In some embodiments, the first pressure roller 110, the second pressure roller 120, and the composite roller 410 are arranged in a first direction. Along the first direction, the second pressure roller 120 is located between the first pressure roller 110 and the composite roller 410, and the first direction is perpendicular to an axial direction of the second pressure roller 120.

The first direction is any direction perpendicular to the axial direction of the second pressure roller 120, for example, the first direction can be a horizontal direction. For another example, the first direction can be a vertical direction. The first pressure roller 110, the second pressure roller 120, and the composite roller 410 are arranged in the first direction in sequence.

With the first pressure roller 110, the second pressure roller 120, and the composite roller 410 being arranged in the first direction, the second pressure roller 120 not only can cooperate with the first pressure roller 110 to roll the active substance 500 to form the membrane 600, but also can cooperate with the composite roller 410 to roll the membrane 600 and the substrate 700, so as to composite the membrane 600 and the substrate 700 into the pole piece 800. The second pressure roller 120 can also transport the formed membrane 600 between the second pressure roller 120 and the composite roller 410. With one component achieving multiple functions, the pole piece manufacturing device 10 has a simple structure and a low cost. In addition, by arranging the first pressure roller 110, second pressure roller 120, and composite roller 410 in the first direction, the space occupation of the membrane forming mechanism 100 can be reduced, improving the space utilization rate of the membrane forming mechanism 100.

In some embodiments, the detection mechanism 200 is a laser thickness gauge, a β-ray weight gauge, or an X-ray weight gauge.

The thickness of the membrane 600 can be conveniently measured using the laser thickness gauge. The use of the β-ray weighing instrument is suitable for measuring the weight per unit area of the membrane 600 of the positive pole piece. The use of the X-ray weight gauge is suitable for measuring the weight per unit area of the membrane 600 of the negative pole piece.

Please refer to Figure 7, which is a structural schematic diagram of the pole piece manufacturing device 10 (including the third pressure roller 130) provided in some embodiments of the present application. In some embodiments, the membrane forming mechanism 100 includes a third pressure roller 130, and the first pressure roller 110 and the third pressure roller 130 cooperate with each other to roll the active substance 500.

The third pressure roller 130 is a roller structure. There is a gap between the first pressure roller 110 and the third pressure roller 130 for the active substance 500 to pass through. When the active substance 500 passes through this gap, it is compressed and thinned into a semi-finished product of the membrane 600 by extrusion of the first pressure roller 110 and the third pressure roller 130. The semi-finished product of the membrane 600 is then formed into the membrane 600 by rolling of the first pressure roller 110 and the second pressure roller 120.

The third pressure roller 130 and the first pressure roller 110 can achieve a primary rolling on the active substance 500, and the first pressure roller 110 and the second pressure roller 120 can achieve a secondary rolling on the active substance 500. Through multi-stage rolling, the active substance 500 can gradually form into the membrane 600, and a degree of each rolling is not too large, which is conducive to improving the uniformity and thickness consistency of the membrane 600, and improving the performance of the membrane 600. This results in a higher yield rate of the pole piece 800 made using this membrane 600.

In some embodiments, a first rolling gap is formed between the first pressure roller 110 and the second pressure roller 120. A second rolling gap is formed between the first pressure roller 110 and the third pressure roller 130. The active substance 500 passes through the second rolling gap and the first rolling gap in sequence, with the width of the first rolling gap being smaller than the width of the second rolling gap.

A straight line located in the same plane as axes of the first pressure roller 110 and the second pressure roller 120, and perpendicular to the axes of the first pressure roller 110 and the second pressure roller 120, is the first straight line. The intersection point between the first straight line and circumferential surface of the first pressure roller 110 is the first intersection point, and the intersection point between the first straight line and the circumferential surface of the second pressure roller 120 is the second intersection point. The width of the first rolling gap is the distance between the first intersection point and the second intersection point. The width of the first roller pressing gap can also be simply understood as the minimum distance between the circumferential surfaces of the first pressure roller 110 and the second pressure roller 120.

The straight line located in the same plane as the axes of the first and third pressure rollers 110 and 130 and perpendicular to the axes of the first and third pressure rollers 110 is the second straight line. The intersection point between the second straight line and the circumferential surface of the first pressure roller 110 is the third intersection point, and the intersection point between the second straight line and the circumferential surface of the third pressure roller 130 is the fourth intersection point. The width of the second rolling gap is the distance between the third and fourth intersection points. The width of the second roller pressing gap can also be simply understood as the minimum distance between the circumferential surfaces of the first pressure roller 110 and the third pressure roller 130.

By making the width of the first rolling gap smaller than the width of the second rolling gap, it is beneficial to gradually thinning the active substance 500 by rolling, so that the degree of each thinning by rolling is not too large, which is conducive to improving the uniformity and thickness consistency of the membrane 600.

Referring to Figure 7, in some embodiments, the adjusting mechanism 300 is connected to the first pressure roller 110 and the third pressure roller 130. The adjustment mechanism 300 is configured to adjust the positions at which the first pressure roller 110 and the third pressure roller 130 are located according to the detection results of the detection mechanism 200, so as to adjust the width of the first rolling gap while keep the second rolling gap unchanged.

The adjustment mechanism 300 may include a driving member 310 and a connecting member 320, where the connecting member 320 is connected to the driving member 310, the first pressure roller 110, and the third pressure roller 130. For example, the connecting member 320 includes a first connecting part 321, a second connecting part 322, and a third connecting part 323, where the first connecting part 321 is connected to an output end of the driving member 310, and the second connecting part 322 and the third connecting part 323 are both connected to the first connecting part 321. The second connecting part 322 is connected to the third pressure roller 130, and the third connecting part 323 is connected to the first pressure roller 110. When the driving member 310 acts, the first connecting part 321 drives the second connecting part 322 and the third connecting part 323 to act, and by the transmission of the second connecting part 322 and the third connecting part 323, a simultaneous movement of the first pressure roller 110 and the third pressure roller 130 is achieved.

The first rolling gap is the gap of the final formed membrane 600, while the second rolling gap is the gap of the semi-finished product of the formed membrane 600. If the detection mechanism 200 detects that the membrane 600 does not meet the design requirements, only the first rolling gap needs to be adjusted. In order to adjust the first rolling gap while not affect the second rolling gap, both the first pressure roller 110 and the third pressure roller 130 are connected to the adjustment mechanism 300. The adjustment mechanism 300 simultaneously drives the first pressure roller 110 and the third pressure roller 130 to move, causing the first pressure roller 110 and the third pressure roller 130 to be relatively stationary, and the first pressure roller 110 and the second pressure roller 120 to move relatively.

In some embodiments, the membrane forming mechanism 100 includes a first pressure roller 110 and a second pressure roller 120. The first pressure roller 110 and the second pressure roller 120 cooperate with each other to make the active substance 500 formed into the membrane 600 by rolling. The adjustment mechanism 300 is connected to the first pressure roller 110 and/or the second pressure roller 120, and is configured to increase or decrease the pressure applied to the first pressure roller 110 and/or the second pressure roller 120 according to the detection results of the detection mechanism 200.

The adjustment mechanism 300 is connected to at least one of the first pressure roller 110 and the second pressure roller 120, and is capable of changing the pressure on at least one of the two. For example, the adjustment mechanism 300 can be a hydraulic pressure boosting mechanism, a pneumatic pressure boosting mechanism, an electric pressure boosting mechanism, etc.

If the detection mechanism 200 detects that the thickness or the the weight per unit area of the membrane 600 is small, the adjustment mechanism 300 reduces the pressure applied to the first pressure roller 110 and/or the second pressure roller 120, causing a decrease in the roller pressure of the first pressure roller 110 and/or the second pressure roller 120 in contact with the active substance 500, thereby increasing the thickness or the weight per unit area of the membrane 600. If the detection mechanism 200 detects that the thickness or the weight per unit area of the membrane 600 is large, the adjustment mechanism 300 increases the pressure applied to the first and/or second pressure rollers 110, causing an increase in the roller pressure of the first pressure roller 110 and/or the second pressure roller 120 in contact with the active substance 500, thereby reducing the thickness or the weight per unit area of the membrane 600.

According to some embodiments of the present application, please refer to Figures 2 to 6.

The present embodiment provides a pole piece manufacturing device 10, which includes a membrane forming mechanism 100, a composite mechanism 400, a detection mechanism 200, and an adjustment mechanism 300. The membrane forming mechanism 100 is configured to form an active substance 500 into a membrane 600. The composite mechanism 400 is arranged downstream of the membrane forming mechanism 100, and is configured to composite the membrane 600 and the substrate 700 into a pole piece 800. The detection mechanism 200 is arranged upstream of the composite mechanism 400, and is configured to detect a thickness or a weight per unit area of the membrane 600. The adjustment mechanism 300 is connected to the membrane forming mechanism 100, and the adjustment mechanism 300 is connected in communication with the detection mechanism 200. The adjustment mechanism 300 is configured to adjust the membrane forming mechanism 100 according to detection results of the detection mechanism 200, so as to control the thickness or the weight per unit area of the membrane 600 within the preset range.

The membrane forming mechanism 100 includes a first pressure roller 110 and a second pressure roller 120, where the first pressure roller 110 and the second pressure roller 120 cooperate with each other to make the active substance 500 formed into the membrane 600 by rolling. The adjustment mechanism 300 is connected to the first pressure roller 110 and/or the second pressure roller 120, and is configured to adjust the gap between the first pressure roller 110 and the second pressure roller 120 according the detection results of the detection mechanism 200. The composite mechanism 400 includes a composite roller 410, which cooperates with the second pressure roller 120 to roll the membrane 600 and a substrate 700, so as to composite the membrane 600 and the substrate 700 into a pole piece 800. Along the circumference direction of the second pressure roller 120, the first pressure roller 110 is closer to the detection mechanism 200 than the composite roller 410.

The membrane forming mechanism 100 can form the active substance 500 into the membrane 600, and then the substrate 700 and the membrane 600 are composited by the composite mechanism 400 to obtain the pole piece 800. The pole piece manufacturing device 10 detects the membrane 600 formed by the membrane forming mechanism 100 by meas of providing the detection mechanism 200 upstream of the composite mechanism 400, so as to determine whether the membrane 600 formed by the membrane forming mechanism 100 meets the design requirements. If the design requirements are not met, the membrane forming mechanism 100 is adjusted timely by the adjustment mechanism 300, so as to make the membrane 600 formed by the membrane forming mechanism 100 meet the design requirements. In this way, the yield rate of membrane 600 is increased, resulting in a higher yield rate of the pole piece 800 produced using this membrane 600.

The first pressure roller 110 and the second pressure roller 120 can cooperate with each other to roll the active substance 500 to form a membrane 600. The gap between the first pressure roller 110 and the second pressure roller 120 can affect the thickness or the weight per unit area of the membrane 600. For example, when the gap between the first pressure roller 110 and the second pressure roller 120 is large, the thickness or the weight per unit area of the membrane 600 is also large; and when the gap between the first pressure roller 110 and the second pressure roller 120 is small, the thickness or the weight per unit area of the membrane 600 is also small. The adjustment mechanism 300 can be connected to at least one of the first pressure roller 110 and the second pressure roller 120, so as to drive at least one of the first pressure roller 110 and the second pressure roller 120 close to or away from the other, reducing or increasing the gap between the first pressure roller 110 and the second pressure roller 120. When the detection mechanism 200 detects a large thickness or weight per unit area of the membrane 600, the adjustment mechanism 300 can reduce the gap between the first pressure roller 110 and the second pressure roller 120; and when the detection mechanism 200 detects a small thickness or weight per unit area of the membrane 600 is small, the adjustment mechanism 300 can increase the gap between the first pressure roller 110 and the second pressure roller 120 to control the thickness or the weight per unit area of the membrane 600 within the preset range, so that the thickness or the weight per unit area of the membrane 600 meets the design requirements.

The composite roller 410 and the second pressure roller 120 cooperate with each other to roll the membrane 600 and the substrate 700, so as to composite the membrane 600 and the substrate 700 into the pole piece 800. The second pressure roller 120 serves as both a component for rolling the active substance 500 and a component for compositing the membrane 600 and substrate 700, with one component achieving two effects, the structure of the pole piece manufacturing device 10 is simplified and the cost of the pole piece manufacturing device 10 is reduced. The active substance 500 is formed into the membrane 600 after being rolled by the first pressure roller 110 and the second pressure roller 120, and the membrane 600 is transported between the second pressure roller 120 and the composite roller 410 to be composited with the substrate 700. If the detection mechanism 200 detects that the membrane 600 does not meet the design requirements, then along the circumference direction of the second pressure roller 120, a section of the membrane 600 between the first pressure roller 110 and the detection mechanism 200 does not meet the design requirements. The position at which the detection mechanism 200 is located is arranged closer to the first pressure roller 110, and when the detection mechanism 200 detects that the membrane 600 does not meet the design requirements, the adjustment mechanism 300 can adjust the membrane forming mechanism 100 timely, making a length of the membrane 600 that does not meet the design requirements shorter.

The above is only preferred embodiments of the present application and is not intended to limit the present application. For those skilled in the art, there may be various modifications and variations to the present application. Any modifications, equivalent replacements, improvements, etc. made within the spirit and principles of the present application shall be included within the scope of protection of the present application.

## Claims

1. A pole piece manufacturing device, comprising:
a membrane forming mechanism, configured to form an active substance into a membrane;
a composite mechanism, arranged downstream of the membrane forming mechanism, wherein the composite mechanism is configured to composite the membrane and a substrate into a pole piece;
a detection mechanism, arranged upstream of the composite mechanism, wherein the detection mechanism is configured to detect a thickness or a weight per unit area of the membrane;
an adjustment mechanism, connected to the membrane forming mechanism, wherein the adjustment mechanism is connected in communication with the detection mechanism, and the adjustment mechanism is configured to adjust the membrane forming mechanism according to detection results of the detection mechanism, so as to control the thickness or the weight per unit area of the membrane within a preset range.

2. The pole piece manufacturing device according to claim 1, wherein the membrane forming mechanism comprises a first pressure roller and a second pressure roller, and the first pressure roller and the second pressure roller cooperate with each other to make the active substance formed into the membrane by rolling; and
the adjustment mechanism is connected to the first pressure roller and/or the second pressure roller, and the adjustment mechanism is configured to adjust a gap between the first pressure roller and the second pressure roller according to the detection results of the detection mechanism.

3. The pole piece manufacturing device according to claim 2, wherein the composite mechanism comprises a composite roller, and the composite roller and the second pressure roller cooperate with each other to roll the membrane and the substrate, so as to composite the membrane and the substrate into the pole piece.

4. The pole piece manufacturing device according to claim 3, wherein the adjustment mechanism is connected to the first pressure roller, and the adjustment mechanism is configured to adjust a position at which the first pressure roller is located, so as to adjust the gap between the first pressure roller and the second pressure roller.

5. The pole piece manufacturing device according to claim 3, wherein the membrane is provided with a winding area wound on the second pressure roller, and the detection mechanism is provided with a detection end, wherein the detection end faces the winding area.

6. The pole piece manufacturing device according to claim 3, wherein along a circumferential direction of the second pressure roller, the first pressure roller is closer to the detection mechanism than the composite roller.

7. The pole piece manufacturing device according to any one of claims 3-6, wherein the first pressure roller, the second pressure roller, and the composite roller are arranged along a first direction; and along the first direction, the second pressure roller is located between the first pressure roller and the composite roller, wherein the first direction is perpendicular to an axial direction of the second pressure roller.

8. The pole piece manufacturing device according to any one of claims 1-7, wherein the detection mechanism is a laser thickness gauge, a β-ray weight gauge, or an X-ray weight gauge.

9. The pole piece manufacturing device according to claim 3, wherein the membrane forming mechanism comprises a third pressure roller, and the first pressure roller and the third pressure roller cooperate with each other to roll the active substance.

10. The pole piece manufacturing device according to claim 9, wherein a first rolling gap is formed between the first pressure roller and the seconding press roller, and a second rolling gap is formd between the first pressure roller and the third pressure roller, wherein the active substance passes through the second rolling gap and the first rolling gap in sequence, and a width of the first rolling gap is smaller than that of the second rolling gap.

11. The pole piece manufacturing device according to claim 10, wherein the adjustment mechanism is connected to the first pressure roller and the third pressure roller, and the adjustment mechanism is configured to adjust positions at which the first pressure roller and the third pressure roller are located according to the detection results of the detection mechanism, so as to adjust the width of the first rolling gap while the second rolling gap remains unchanged.

12. The pole piece manufacturing device according to claim 1, wherein the membrane forming mechanism comprises a first pressure roller and a second pressure roller, and the first pressure roller and the second pressing cooperate with each other to make the active substance formed into the membrane by rolling; and
the adjustment mechanism is connected to the first pressure roller and/or the second pressure roller, and the adjustment mechanism is configured to increase or decrease a pressure applied to the first pressure roller and/or the second pressure roller according to the detection results of the detection mechanism.
